# EUROPÄISCHE PATENTSCHRIFT

(11) **EP 0 602 501 B1**
(45) Veröffentlichungstag und Bekanntmachung des Hinweises auf die Patenterteilung: **26.03.1997**
(21) Anmeldenummer: 93119657.0
(22) Anmeldetag: 07.12.1993
(51) Int. Cl.: E06B 7/16, B65G 69/00

(54) **Verformbare Dichtung des Spaltes zwischen dem Rand einer Gebäudeöffnung und dem Heck eines an diese herangefahrenen Fahrzeuges**
Flexible sealing of the gap between the edge of an opening in a building and the rear of a vehicle drawn up to the same
Joint d'étanchéité déformable pour la fente entre le bord d'une ouverture de bâtiment et l'arrière d'un véhicule s'y approchant

(30) Priorität: 14.12.1992 DE 4242087
(43) Veröffentlichungstag der Anmeldung: 22.06.1994
(73) Patentinhaber: ALTEN GERÄTEBAU GMBH, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-A- 3 629 643
- DE-A- 3 840 061
- DE-A- 4 111 367
- DE-U- 7 422 444
- DE-U- 8 210 653

## Beschreibung

Die Erfindung betrifft eine verformbare Dichtung des Spaltes zwischen dem Rand einer Gebäudeöffnung und dem Heck eines an diese herangefahrenen Fahrzeuges mit einer lappigen, verformbaren Schürze aus zwei zu beiden Seiten der Gebäudeöffnung angeordneten senkrechten Streifen und einem im Bereich der oberen Streifenenden befindlichen Querteil, von dem aus sich nach hinten zum Gebäude hin eine Dachplane erstreckt, wobei die beiden Streifen an ihren seitlich aussen gelegenen Rändern mit dem vorderen Rand an verformbaren, hinten am Gebäude verankerten Seitenteilen befestigt sind und die Seitenteile mit den Streifen im Abstand von der Dachplane enden in der Weise, dass die beiden Streifen und die Seitenteile bei einer Beaufschlagung durch ein Fahrzeug unabhängig von dem Querteil verformbar sind.

Bei den bekannten Dichtungen dieser Ausbildung sind die Seitenteile als Schaumstoffpakete oder starke Federn ausgebildet und somit so ausgebildet, dass sie selbsttragend sind. Diese kompakte Bauweise hat zur Folge, dass eine leichte Verformbarkeit der Dichtung zur Anpassung an die Heckgestalt des Fahrzeuges nicht immer in ausreichendem Masse gegeben ist.

Aufgrund der Erfindung sollen diese Nachteile beseitigt werden; durch eine besondere Ausbildung der Seitenteile und ihrer Halterungen sollen die Konstruktion vereinfacht und die Verformbarkeit verbessert werden.

Zur Lösung dieser Aufgabe sind erfindungsgemäss die Seitenteile lappige, leicht verformbare, nicht eigensteife Planen, die mittels nachgiebiger, biegsamer, an ihren oberen Enden engreifender Halterungen aufgehängt und an ihren unteren Enden ihre Breite erhaltende, nachgiebige Spreizmittel aufweisen.

Demgemäss werden auch für die Seitenteile leicht verformbare Planen benutzt; es bedarf somit nicht der Verwendung eigensteifer Konstruktionen. Weiterhin sind infolge der elastischen Aufhängung und der unten befindlichen Spreizen keine Lenker oder andere Führungsmittel in Form der bekannten Rahmenkonstruktionen notwendig. Vielmehr werden aufgrund der Erfindung die Gestalt der Seitenteile und der damit verbundenen Streifen durch die erwähnte nachgiebige Aufhängung sichergestellt, die vorzugsweise durch die das Querteil am oberen Rand tragende Traverse sichergestellt wird. Darüber hinaus können zusätzlich die beiden Streifen untereinander durch elastische Seile od. dgl. verbunden und/oder ebenfalls elastisch aufgehängt werden.

Weitere Einzelheiten der Erfindung werden anhand der Zeichnung erläutert, in der ein Ausführungsbeispiel der Erfindung dargestellt ist.

Es zeigen :
- Fig. 1: die linke Hälfte einer verformbaren Dichtung des Spaltes zwischen dem Rand einer Gebäudeöffnung und dem Heck eines an diese herangefahrenen Fahrzeuges in der Ansicht,
- Fig. 2: einen Schnitt nach der Linie II - II von Fig. 1,
- Fig. 3: einen Teilschnitt nach der Linie III - III von Fig. 1 und
- Fig. 4: eine Einzelheit aus Fig. 2 bei IV.

Die Wandung 1 eines Gebäudes z.B. eines Lagerhauses hat eine Gebäudeöffnung 2, die z.B. durch ein Sektionaltor verschlossen werden kann. Um den Spalt zwischen dem Rand dieser Öffnung und dem Heck eines andockenden Fahrzeuges abzudichten, wird eine verformbare Dichtung gemäss Zeichnung vorgesehen, um einen Ladebetrieb ohne grössere Witterungsnachteile durchführen zu können.

Mit Abstand von der Wandung 1 ist eine verformbare Schürze vorgesehen, die aus einem oben gelegenen Querteil 3 und zwei zu beiden Seiten der Gebäudeöffnung 2 befindlichen, senkrecht verlaufenden Streifen 4 besteht. Das vor den Streifen 4 befindliche Querteil 3 ist gardinenartig aufgehängt und oben mit einer biegesteifen Traverse 5 verbunden, die von schräg nach oben gerichteten Streben 6 getragen ist.

An der Traverse 5 ist ein Metallprofil 7 befestigt, das der Aufhängung des Querteils 3 und einer Dachplane 8 dient, die mit ihrem hintern Ende an der Wandung 1 befestigt ist.

Die beiden im Bereich der Enden des Querteils 3 angeordneten Streben 6 sind mit der Traverse 5 starr verbunden, die Streben 6 sind jedoch am unteren Ende an einem Gleitstein 8 verschwenkbar und somit im Sinne des Pfeiles 9 bewegbar. Der Gleitstein 8 kann an senkrechten Führungen 1o, die an der Wandung 1 befestigt sind, Hubbewegungen ausführen. Demgemäss kann das Querteil 3 mit der Traverse 5 und der Dachplane 8 Hubbewegungen ausführen, die z.B. bei vergleichsweise hohen Fahrzeugen oder bei Hubbewegungen von Sattelaufliegern notwendig sind.

An beiden Enden der Dachplane 8 sind Überhänge 11 als frei herabhängende Lappen vorgesehen.

Für die Beurteilung der Erfindung sind die die Dichtung seitlich aussen abschliessenden Seitenteile 12 von besonderer Bedeutung. Sie sind mit einem Rand an der Wandung 1 und mit dem anderen Rand an einem senkrechten Kantenprofil 13 befestigt, das seinerseits die senkrechten Streifen 4 trägt. Die Seitenteile 12 überbrücken also dichtungsmässig den Abstand zwischen der Wandung 1 und den seitlichen Rändern der Streifen 4. Die Teile 4, 12 sind dabei - ebenso wie die Teile 3, 8 und 11 - aus einem lappigen, folienartigen Material, das sich der Kontur eines Fahrzeuges anpassen kann,insg. aber zug- und reissfest ist. Dabei kann ein mit Gummi oder Kunststoff beschichtetes Gewebe verwendet werden.

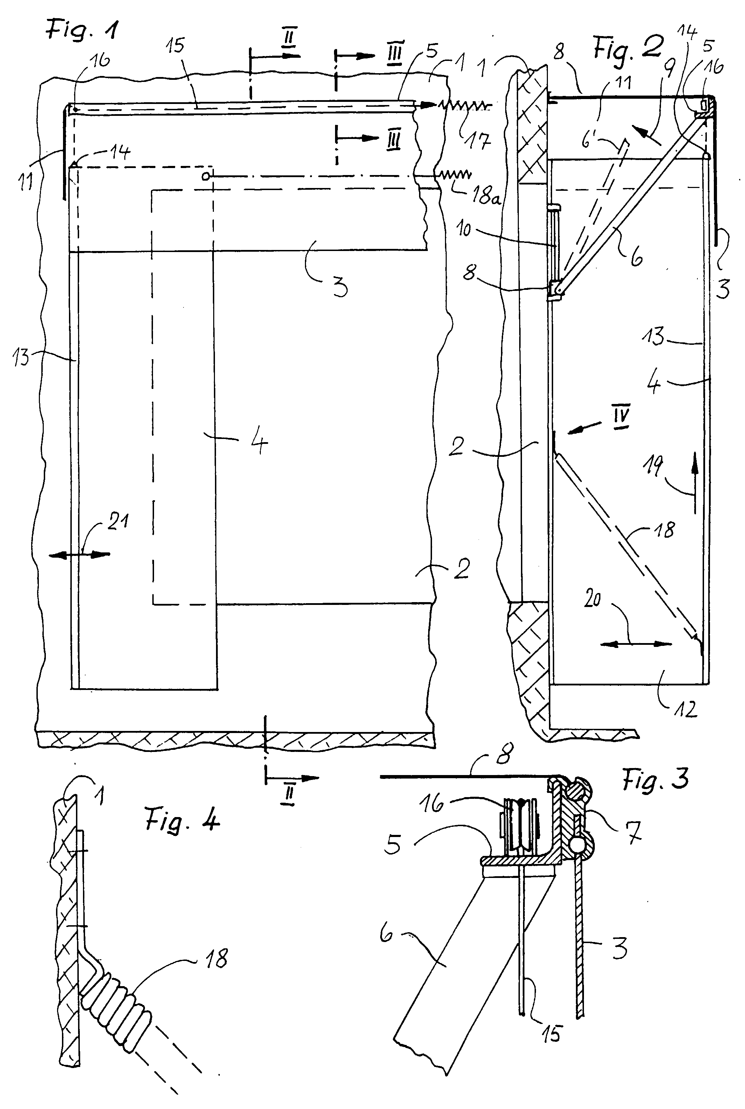

Fig. 1 und 2 lassen im übrigen erkennen, dass die beiden Streifen 4, das metallische Kantenprofil 13 und die Seitenteile 12 mit Abstand unterhalb der Dachplane 8 und der Traverse 5 enden. Der freie Raum wird jedoch nach vorne hin vom Querteil 3 und an beiden Seiten vom Überhang 11 abgedeckt und somit abgedichtet.

Die Seitenteile 12 sind nicht durch tragende, an der Wandung 1 befestigte Lenker gehalten, vielmehr sind sie nur durch etwa im Bereich der Kantenprofile 13 bei 14 angreifende Seile 15 getragen, die durch die Traverse 5 hindurchgeführt, dort mit Rollen 16 umgelenkt sind und schliesslich über eine versteckt angeordnete Zugfeder 17 in Verbindung stehen. Zusätzlich stehen die inneren Ecken der Streifen 4 über einen elastischen Zug 18a in Verbindung, wenngleich auch die Streifen 4 über nach oben gerichtete elastische Züge - an der Traverse 5 befestigt - abgefangen werden können.

Im Bereich des unteren Endes des Kantenprofils 13 ist mit diesem das unteren Ende einer ganz eng gewickelten Schraubenfeder 18 fest verbunden, die unter einem Winkel von etwa 3o - 6o ° gegenüber der Senkrechten ansteigt. Sie ist zudem am oberen Ende fest mit der Wandung 1 verbunden.

Da durch die Aufhängung mit Hilfe des Seiles 15 eine Haltekraft bzw. eine Zugkraft im Sinne des Pfeiles 19, insb. in Längsrichtung des Kantenprofils 13 bedingt ist, ergibt sich eine entsprechende Krafteinwirkung auf das untere Ende der Schraubenfeder 18, während gleichzeitig in die Seitelteile 12 eine Zugspannung 20 eingeleitet wird, der jedoch das gewebeverstärkte Material für das Seitenteil 12 nicht nachgibt. Dies bedeutet, dass im Ruhezustand der Dichtung gemäss Erfindung eine gestraffte Gestalt der Seitenteile 12 gegeben ist bzw. erhalten bleibt. Die schräg anstehende,in Längsrichtung drucksteife Schraubenfeder 18 wirkt wie eine Strebe, die ein Spreizglied für die Seitenteile 12 darstellt und somit auch die Normalstellung gemäss Zeichnung sicherstellt. Die Besonderheit der genannten Schraubenfeder 18 besteht zudem darin, dass sie Lateralkräften durch elastisches Verbiegen entgegentritt. Schrägkräfte, die in aller Regel bei einer Beaufschlagung durch ein Fahrzeug entstehen, führen daher zu einer elastischen Verformung der gesamten Schürze einschl. Seitenteile 12. Verlässt das Fahrzeug die Dichtung, so kehrt die Schraubenfeder 18 in ihre gestreckte Gestalt zurück und strafft dabei die Seitenteile 12.

Darüber hinaus können durch Biegeverformung der Schraubenfeder 18 Seitenbewegungen des Kantenprofils 13 im Sinne des Doppelpfeiles 21 eintreten, und zwar im unteren, aber auch im oberen Bereich der Streifen 4, da es ja auch im oberen Bereich durch die Nachgiebigkeit der Feder 17 eine entsprechende Auslenkung erfahren kann. Durch eine vergleichsweise grosse Verformung der Streifen bzw. eine entsprechend grosse Beaufschlagung der Dichtung kann die Schraubenfeder 18 mit Zugfedereigenschaften sogar einknicken. Mit dem Nachlassen der Beaufschlagung nimmt sie dann unter Rückverformung der Dichtung insb. der Seitenteile 12 ihre gestreckte Gestalt wieder ein.

Die Spreize in Form der Schraubenfeder 18 hat somit praktisch keine tragende Funktion in bezug auf die Gewichtsbelastung durch die Streifen 4 und die Seitenteile 12; die dazu notwendigen Kräfte werden vielmehr praktisch von der Zugfeder 17 aufgenommen.

Unter gewissen Bedingungen kann die Schraubenfeder 18 durch einen ebenfalls im Sinne der Schraubenfeder 18 verlaufende Strebe ersetzt werden, die aus einem Metallstab od. dgl. bestehen kann, jedoch an beiden Enden gelenkig mit der Wandung bzw. dem Kantenprofil 13 verbunden sein muss. In diesem Falle ist es aber zweckmässig, die Gelenkstellen so auszubilden, dass nicht nur eine Verschwenkung um senkrechte Achse, sondern auch um andere Achsen nach Möglichkeit nach Art eines Kugelgelenks durchführbar ist. Ggfs. kann die so ausgeführte Strebe z.B. durch teleskopartige Ausbildung längenverkürzbar sein, und zwar gegen die Wirkung einer Feder, die den Zustand gemäss Zeichnung immer wieder herstellen muss und damit auch die Spreizung und Straffung der Seitenteile 12 bewerkstelligt.

## Patentansprüche

1. Verformbare Dichtung des Spaltes zwischen dem Rand einer Gebäudeöffnung und dem Heck eines an diese herangefahrenen Fahrzeuges mit einer lappigen, verformbaren Schürze aus zwei zu beiden Seiten der Gebäudeöffnung angeordneten senkrechten Streifen und einem im Bereich der oberen Streifenenden befindlichen , oben an einer Traverse befestigten Querteil, von dem aus sich nach hinten zum Gebäude hin eine Dachplane erstreckt, wobei die beiden Streifen an ihren seitlich aussen gelegenen Rändern mit dem vorderen Rand von verformbaren, hinten am Gebäude befestigten Seitenteilen fest verbunden sind und die Seitenteile und die daran befestigten Streifen im Abstand unterhalb der Dachplane enden in der Weise, dass die Seitenteile und die Streifen unabhängig vom Querteil in Richtung auf das Gebäude verformbar sind, dadurch gekennzeichnet, dass die Seitenteile (12) lappige, verformbare, nicht eigensteife Planen sind, die mittels nachgiebiger, biegsamer, an ihren obigen Enden angreifender Halterungen (15,17) aufgehängt sind und im Bereich ihres unteren Endes Spreizmittel (18) zur Aufrechterhaltung ihrer Breitenerstreckung bei nicht beaufschlagter Dichtung aufweisen.

2. Dichtung nach Anspruch 1, dadurch gekennzeichnet, dass die Spreizmittel (18) in Längsrichtung drucksteif sind, bei von der Längsrichtung abweichenden Kräften jedoch knicken und/oder ausweichen.

3. Dichtung nach Anspruch 1, dadurch gekennzeichnet, dass die Seitenteile (12) mit den Streifen (4) ausser ihren Halterungen (15,17) keine Tragmittel aufweisen.

4. Dichtung nach Anspruch 1 und 2, dadurch gekennzeichnet, dass das Spreizmittel von einer Strebe (18) gebildet ist, die den vorderen Rand (13) des Seitenteils (12) mit dem Gebäude (1) verbindet und schräg nach unten verläuft, wobei die tiefste Stelle die Befestigungsstelle der Strebe am Seitenteil ist.

5. Dichtung nach Anspruch 4, dadurch gekennzeichnet, dass die Strebe mit der Senkrechten einen Winkel von etwa 3o - 6o ° bildet.

6. Dichtung nach Anspruch 5, dadurch gekennzeichnet, dass der Winkel etwa 45° beträgt.

7. Dichtung nach Anspruch 1, dadurch gekennzeichnet, dass die beiden Seitenteile (12) durch einen Seilzug (15) mit zwischengeschalteter Zugfeder (17) gehalten sind, wobei der Seilzug - vorzugsweise versteckt - an der Traverse (5) gelagert ist.

8. Dichtung nach Anspruch 1 und 2, dadurch gekennzeichnet, dass die Spreizmittel von einer eng gewickelten Zugfeder (18) gebildet sind.

9. Dichtung nach Anspruch 1 und 2, dadurch gekennzeichnet, dass die Spreizmittel von einer steifen Strebe gebildet sind, die gelenkig mit dem Seitenteil (12) und dem Gebäude (1) verbunden ist.

10. Dichtung nach Anspruch 8, dadurch gekennzeichnet, dass die Enden der Zugfeder fest mit dem Seitenteil (12) bzw. einem an ihrem Rand befindlichen steifen Profil einerseits und dem Gebäude (1) andererseits verbunden sind.

11. Dichtung nach Anspruch 1, dadurch gekennzeichnet, dass das Querteil (3), die Traverse (5) und die Dachplane (8) anhebbar sind.

12. Dichtung nach Anspruch 11, dadurch gekennzeichnet, dass mit der Traverse (5) eine Strebe (6) fest verbunden ist, die sich schräg nach unten erstreckt und an ihrem unteren, dem Gebäude zugekehrten Ende höhenveränderbar gelagert ist.

13. Dichtung nach Anspruch 1, dadurch gekennzeichnet, dass die Verbindungsstelle zwischen einem Streifen (4) und dem zugehörigen Seitenteil (12) durch eine Leiste (13) versteift ist.

14. Dichtung nach Anspruch 1 und 13, dadurch gekennzeichnet, dass die Spreizmittel (18) an der Leiste (13) angreifen.

15. Dichtung nach Anspruch 1, dadurch gekennzeichnet, dass die Spreizmittel (18) elastisch verformbar sind.

16. Dichtung nach Anspruch 1, dadurch gekennzeichnet, dass die Halterungen (15,17) an den dem Gebäude (1) abgekehrten, versteiften Rändern der Seitenteile (12) angreifen.

## Claims

1. Deformable seal for sealing the gap between the edge of a building opening and the rear of a vehicle being positioned thereat, having a soft, deformable apron formed from two vertical strips, which are disposed on both sides of the building opening, and a transverse member, which is situated in the region of the upper strip ends and is mounted at its upper end on a cross-piece member, a top cover extending from said transverse member rearwardly to the building, the two strips being securely connected at their laterally outer edges to the front edge of deformable lateral portions mounted with their rear on the building, and the lateral portions and the strips mounted thereon terminating with a spacing beneath the top cover in such a manner that the lateral portions and the strips are deformable towards the building independently of the transverse member, characterised in that the lateral portions (12) are soft, deformable, non-inherently rigid covers, which are suspended by means of resilient, flexible holders (15, 17) co-operating with their upper ends and have expanding means (18) in the region of their lower end to maintain their width extension when the seal is not impinged.

2. Seal according to claim 1, characterised in that the expanding means (18) are pressure-resistant in the longitudinal direction, but they bend and/or yield in the event of any forces which deviate from the longitudinal direction.

3. Seal according to claim 1, characterised in that the lateral portions (12), provided with the strips (4), have no supporting means except their holders (15, 17).

4. Seal according to claims 1 and 2, characterised in that the expanding means is formed by a strut (18), which connects the front edge (13) of the lateral portion (12) to the building (1) and extends inclinedly downwardly, the lowest location being the location where the strut is mounted on the lateral portion.

5. Seal according to claim 4, characterised in that the strut forms an angle of between substantially 30° and 60° with the vertical.

6. Seal according to claim 5, characterised in that the angle is substantially 45°.

7. Seal according to claim 1, characterised in that the two lateral portions (12) are retained by a cable line (15) with an interposed tension spring (17), the cable line being mounted on the cross-piece member (5) - preferably in a concealed manner.

8. Seal according to claims 1 and 2, characterised in that the expanding means are formed by a tightly wound tension spring (18).

9. Seal according to claims 1 and 2, characterised in that the expanding means are formed by a rigid strut which is pivotally connected to the lateral portion (12) and the building (1).

10. Seal according to claim 8, characterised in that the ends of the tension spring are securely connected to the lateral portion (12), or respectively a rigid profile situated at its edge, on the one hand, and the building (1), on the other hand.

11. Seal according to claim 1, characterised in that the transverse member (3), the cross-piece member (5) and the top cover (8) are raisable.

12. Seal according to claim 11, characterised in that a strut (6), which extends inclinedly downwardly and is vertically adjustably mounted at its lower end facing the building, is securely connected to the cross-piece member (5).

13. Seal according to claim 1, characterised in that the junction between a strip (4) and the associated lateral portion (12) is reinforced by a bar (13).

14. Seal according to claims 1 and 13, characterised in that the expanding means (18) co-operate with the bar (13).

15. Seal according to claim 1, characterised in that the expanding means (18) are elastically deformable.

16. Seal according to claim 1, characterised in that the holders (15, 17) co-operate with the reinforced edges of the lateral portions (12) remote from the building (1).

## Revendications

1. Dispositif déformable pour rendre étanche l'intervalle compris entre le bord d'une baie d'un bâtiment et l'arrière d'un véhicule qui s'en approche, comportant une jupe flasque, déformable, constituée de deux bandes verticales disposées de part et d'autre de la baie du bâtiment et d'une pièce transversale, qui se trouve dans la zone des extrémités supérieures des bandes, qui est fixée par le haut à une traverse et de laquelle s'étend une bâche de toit vers l'arrière du bâtiment, les deux bandes étant reliées de manière fixe par leurs bords extérieurs latéraux au bord avant de pièces latérales déformables fixées à l'arrière du bâtiment et les pièces latérales et les bandes qui y sont fixées se terminant à distance sous la bâche de toit de telle sorte que les pièces latérales et les bandes puissent être déformées indépendamment de la pièce transversale en direction du bâtiment, caractérisé en ce que les pièces (12) latérales sont des bâches flasques déformables, qui n'ont pas de rigidité propre, qui sont suspendues au moyen de fixations (15, 17) susceptibles de céder, souples et s'appliquant à leurs extrémités supérieures et comportent dans la zone de leurs extrémités inférieures des moyens (18) d'écartement destinés à maintenir leur étendue en largeur lorsque le dispositif d'étanchéité n'est pas soumis à des contraintes.

2. Dispositif d'étanchéité suivant la revendication 1, caractérisé en ce que les moyens (18) d'écartement sont résistants en compression dans le sens longitudinal, mais s'infléchissent et/ou se déportent en cas de force s'écartant de la direction longitudinale.

3. Dispositif d'étanchéité suivant la revendication 1, caractérisé en ce que les pièces (12) latérales et les bandes (4) n'ont pas de moyens de support hormis leurs fixations (15, 17).

4. Dispositif d'étanchéité suivant la revendication 1 et 2, caractérisé en ce que les moyens d'écartement sont formés par une barre (18), qui relie le bord avant (13) de la pièce latérale (12) au bâtiment (1) et qui s'étend en oblique vers le bas, le point le plus bas étant le point de fixation de la barre à la pièce latérale.

5. Dispositif d'étanchéité suivant la revendication 4, caractérisé en ce que la barre fait un angle d'environ 30° à 60° avec la verticale.

6. Dispositif d'étanchéité suivant la revendication 5, caractérisé en ce que l'angle est d'environ 45°.

7. Dispositif d'étanchéité suivant la revendication 1, caractérisé en ce que les deux pièces (12) latérales sont maintenues par un câble (15) avec ressort (17) de traction intercalé, le câble, étant monté, de préférence étant dissimulé, dans la traverse (5).

8. Dispositif d'étanchéité suivant la revendication 1 et 2, caractérisé en ce que les moyens d'écartement sont formés par un ressort (18) de traction enroulé étroitement.

9. Dispositif d'étanchéité suivant la revendication 1 et 2, caractérisé en ce que les moyens d'écartement sont formés par une barre rigide, qui est articulée à la pièce (12) latérale et au bâtiment (1).

10. Dispositif d'étanchéité suivant la revendication 8, caractérisé en ce que les extrémités du ressort de traction sont reliées de manière fixe à la pièce (12) latérale ou à un profilé rigide se trouvant à son bord d'une part et au bâtiment (1) d'autre part.

11. Dispositif d'étanchéité suivant la revendication 1, caractérisé en ce que la pièce (3) transversale, la traverse (5) et la bâche (8) de toit peuvent être soulevées.

12. Dispositif d'étanchéité suivant la revendication 11, caractérisé en ce qu'une barre (6) qui s'étend en oblique vers le bas et qui est montée de manière à ce que la hauteur de son extrémité inférieure tournée vers le bâtiment puisse être modifiée, est reliée de manière fixe à la traverse (5).

13. Dispositif d'étanchéité suivant la revendication 1, caractérisé en ce que le point de liaison entre une bande (4) et la pièce (12) latérale associée est renforcé par une barrette (13).

14. Dispositif d'étanchéité suivant la revendication 1 et 13, caractérisé en ce que les moyens (18) d'écartement s'appliquent à la barrette (13).

15. Dispositif d'étanchéité suivant la revendication 1, caractérisé en ce que les moyens (18) d'écartement peuvent être déformés élastiquement.

16. Dispositif d'étanchéité suivant la revendication 1, caractérisé en ce que les fixations (15, 17) s'appliquent aux bords renforcés des pièces (12) latérales qui sont éloignés du bâtiment (1).
